(19)

Europäisches
Patentamt
European
Patent Office
Office européen
des brevets

(11) **EP 2 051 524 A1**

(12) **EUROPEAN PATENT APPLICATION**

(43) Date of publication:
**22.04.2009 Bulletin 2009/17**

(51) Int Cl.:
*H04N 7/26* (2006.01)  *H04N 7/30* (2006.01)
*G06T 5/00* (2006.01)

(21) Application number: **07020168.6**

(22) Date of filing: **15.10.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Panasonic Corporation
Kadoma-shi
Osaka 571-8501 (JP)**

(72) Inventors:
• **Knicker, Florian
63225 Langen (DE)**

• **Wedi, Thomas
63225 Langen (DE)**
• **Ramond, Adrien
63225 Langen (DE)**

(74) Representative: **Grünecker, Kinkeldey,
Stockmair & Schwanhäusser
Anwaltssozietät
Leopoldstrasse 4
80802 München (DE)**

(54) **Image enhancement considering the prediction error**

(57) The present invention disclosed methods for enhancing the subjective image quality of decoded images by applying a post-processing technique without amplifying coding artefacts and a corresponding apparatus. This is achieved by applying an image enhancement technique predominantly to image areas where coding artefacts are not likely to occur. These areas are identified based on the prediction error, which is employed to construct a mask for controlling the image enhancement process.

## Fig. 1

**Description**

The present invention relates to prediction-based video coding, and in particular to a method for post-processing decoded images to enhance subjective image quality, and a corresponding apparatus.

BACKGROUND OF THE INVENTION

State-of-the-art video coding techniques such as H.264/AVC compress video data by accepting the loss of information caused by quantization. These techniques are optimized to keep the coded pictures as close as possible to the original ones and to hide coding artefacts for the human viewer. Obviously, compressing pictures to a low bitrate and hiding coding artefacts are conflicting goals. One important aspect is, that even if no artefacts are visible, a loss of sharpness remains in many cases. A large amount of bits would have to be spent to really conserve the sharpness of the original images. Because the available bitrate is very limited in many applications post processing techniques like unsharp masking or local contrast enhancement may be applied to bring back some of the sharpness impression. A common problem of these sharpening techniques is that coding artifacts may also be amplified.

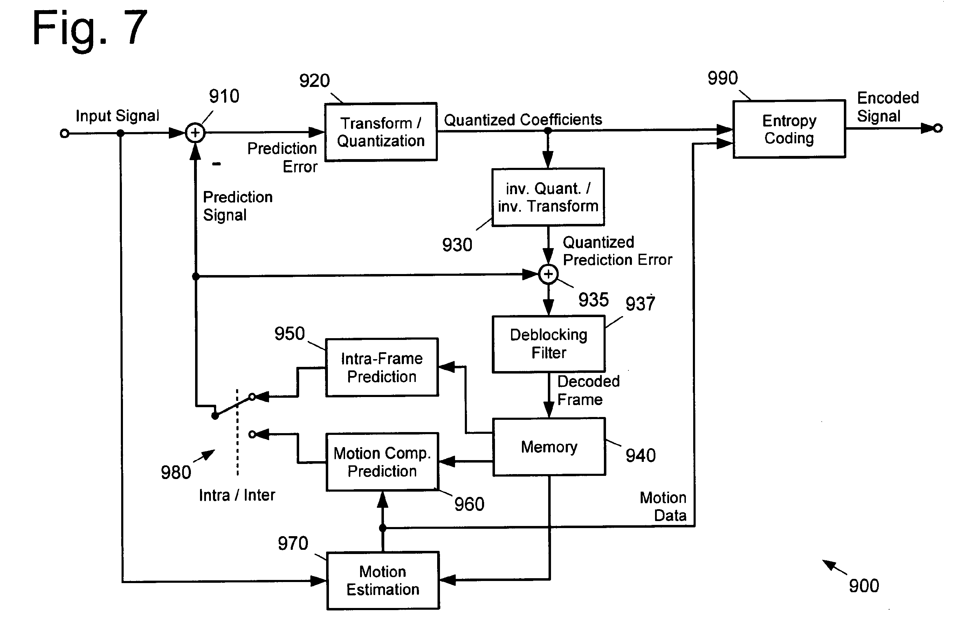

Referring to Fig. 7, an example of a conventional video encoder is illustrated. The video encoder, generally denoted by reference numeral 900, comprises a subtractor 910 for determining differences between a current block of a video image (input signal) and a prediction signal of the current block which is based on previously encoded blocks stored in memory 940. A transformation and quantization unit 920 transforms the resulting prediction error from the spatial domain to the frequency domain and quantizes the obtained transform coefficients. An entropy coding unit 990 entropy encodes the quantized transform coefficients.

In accordance with the H.264 / AVC standard, the input image is divided into macro blocks. The encoder 900 employs a Differential Pulse Code Modulation (DPCM) approach which only transmits differences between blocks of an input video sequence and their predictions based on previously encoded blocks ("the locally decoded image"). These differences are determined in subtractor 910, which receives the blocks to be encoded in order to subtract the prediction signal therefrom.

The locally decoded image is provided by a decoding unit incorporated into video encoder 900. The decoding unit performs the encoding steps in reverse manner. An inverse quantization and inverse transformation unit 930 dequantizes the quantized coefficients and applies an inverse transformation in order to recover the quantized prediction error. In adder 935, the quantized prediction error is added to the prediction signal to form the locally decoded image. Further, a deblocking filter 937 reduces blocking artifacts in the decoded image.

The type of prediction that is employed by video encoder 900 depends on whether the macro blocks are encoded in "Intra" or "Inter" mode. In "Intra" mode the video encoding standard H.264/AVC uses a prediction scheme based on already encoded macro blocks of the same image in order to predict subsequent macro blocks. In "Inter" mode, motion compensated prediction between corresponding blocks of several consecutive frames is employed.

Only Intra-encoded images (I-type images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 950, and Inter-mode, i.e. a processing by motion compensated prediction unit 960, is controlled by Intra/Inter switch 980.

In "Inter" mode, a macro block is predicted from corresponding blocks of previous frames by employing motion compensation. The estimation is accomplished by a motion estimator unit 970, receiving the current input signal and the locally decoded image. Motion estimation yields two-dimensional motion vectors, representing a pixel displacement between the current block and the corresponding block in previous frames. Based on the estimated motion, a motion compensated prediction unit 960 provides a prediction signal.

For both the "Intra" and the "Inter" encoding mode, the differences between the current and the predicted signal are transformed into transform coefficients by transformation / quantization unit 920. Generally, an orthogonal transformation such as a two-dimensional Discrete Cosine transformation (DCT) or an integer version thereof is employed.

The transform coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than fine details so that more bits are spent for coding the low frequency components than for the higher ones.

After quantization, the two-dimensional array of transform coefficients has to be converted into a one-dimensional string to pass it to the entropy encoder. This conversion is done by scanning the array in a predetermined sequence. The thus obtained one-dimensional sequence of quantized transform coefficients is compressed to a series of number pairs called run levels. Finally, the run-level sequence is coded with binary code words of variable length (Variable Length Code, VLC). The code is optimized to assign shorter code words to most frequent run-level pairs occurring in typical video images. The resulting bitstream is multiplexed with the motion information and stored on a recording medium or transmitted to the decoder side.

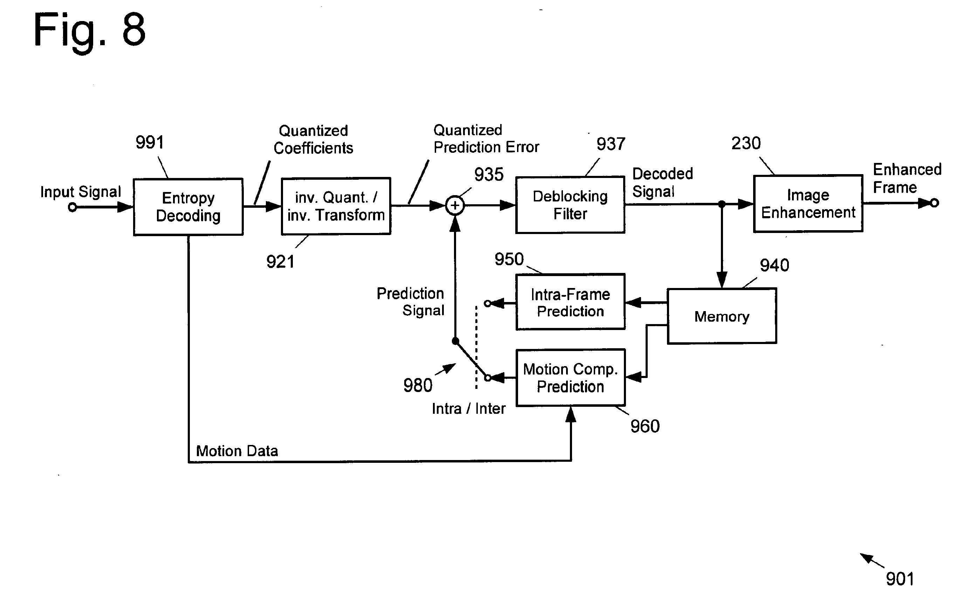

For reconstructing the encoded images at the decoder side, the encoding process is applied in reverse manner. A schematic block diagram, illustrating the configuration of the corresponding decoder, is shown in Fig. 8.

In decoder 901 of Fig. 8, first the entropy encoding of transform coefficients and motion data is reversed in an entropy decoding unit 991. This step also involves an inverse scanning in order to convert the sequence of decoded transform coefficients into a two-dimensional block of data as it is required for the inverse transformation. The decoded block of transform coefficients is then submitted to an inverse quantizer and inverse transformer 921 and the decoded motion data is sent to a motion compensated prediction unit 960. The result of the inverse transformation is the quantized prediction error, which is added by adder 935 to the prediction signal stemming from the motion compensated prediction unit 960 in Inter-mode or stemming from an Intra-frame prediction unit 950 in Intra-mode. The reconstructed image may be passed through a deblocking filter 937 and the decoded signal is stored in memory 940 to be applied to prediction units 950, 960. Finally, image post-processing may be applied in block 230 in order to enhance subjective image quality.

Especially at low bitrates and high compression ratios, the quality of decoded images tends to be degraded due to loss of high frequency components and other coding artefacts. It is thus the aim of a plurality of conventional decoders to improve the (subjective) image quality by applying all kinds of post-processing techniques to decoded images . Among these techniques are image enhancement filters that try to improve the "sharpness" of decoded images, basically by selectively amplifying high frequency components of the decoded images. An example for such a technique is unsharp masking, wherein an "unsharp", i.e., low-pass filtered copy of an image is subtracted from the image, creating the illusion that the resulting image is sharper than the original.

More sophisticated techniques for enhancing subjective image quality rely on statistical properties of the image components that are to be reconstructed. The statistical properties may be derived from the original image or from predetermined reference images. The idea is to replace fine details within the decoded image, which are most severely affected by coding losses, by a synthetic texture that has been generated in accordance with the statistical properties. The resulting image is not a faithful reproduction of the original one but may nevertheless provide a significantly improved subjective image quality.

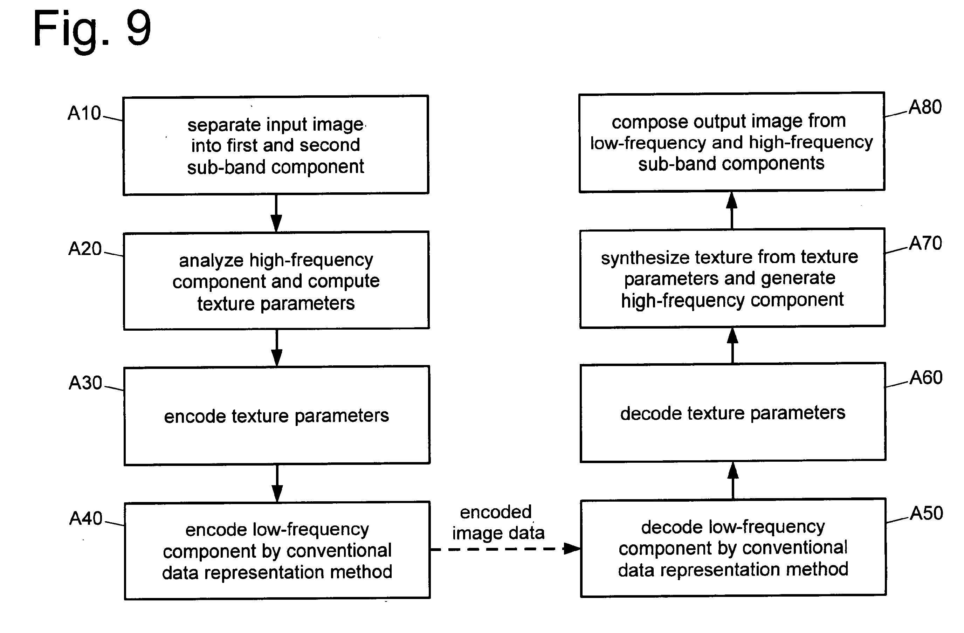

Figure 9 is a flow chart illustrating a conventional method for image and video coding employing additional statistical parameter for image enhancement. In step A10 an input image is separated into a first and a second sub-band component. The high-frequency component is analysed in step A20 so as to compute representative texture parameters, which are then encoded in step A30. The low-frequency component, on the other hand, is encoded by a conventional prediction-based video coding method in step A40. At this point the entire input image is encoded and the encoded image data may be stored to a recording medium or transmitted via a communications channel.

Upon decoding the encoded image data, the low-frequency component is decoded by the conventional prediction-based video decoding method in step A50. The texture parameters, on the other hand, are decoded in step A60 and texture is synthesized from the decoded texture parameters so as to generate a high-frequency sub-band component in step A70. Finally in step A80, the output image is composed from the low-frequency and the high-frequency sub-band components.

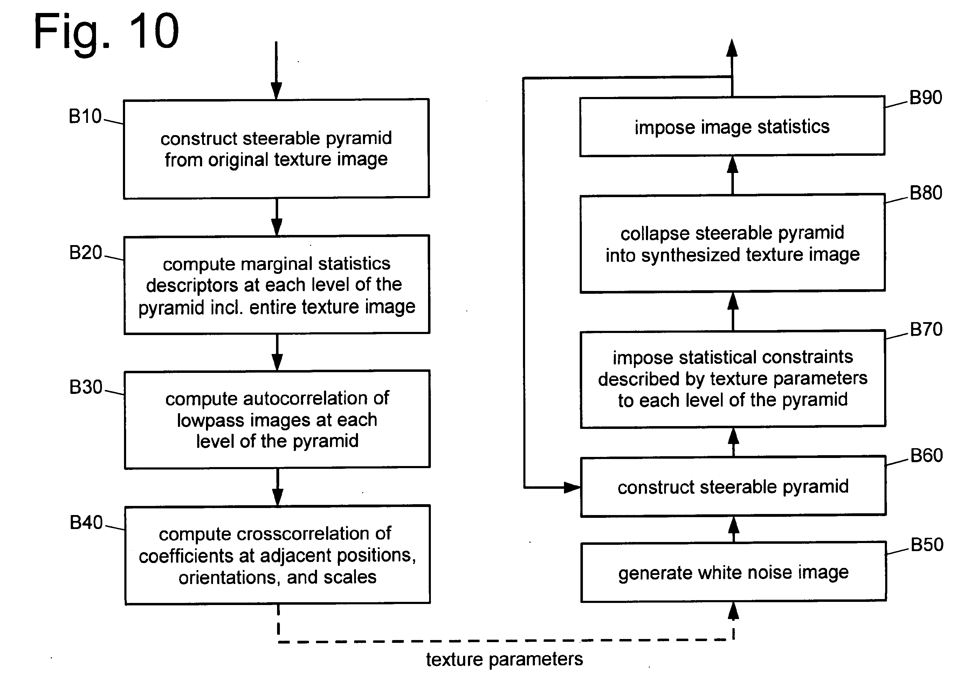

Obviously, the extraction of statistical image properties and the generation of a synthetic texture in accordance with these parameters are a crucial element of any image enhancement technique based on additional statistical parameters. Basically, any texture analysis and synthesis method known in the art may be employed, such as a parametric texture model based on joint statistics of complex wavelet transforms, which is illustrated by the flowchart in Fig. 10.

Referring now to Fig. 10, a steerable pyramid is constructed in step B10 by recursively decomposing the input signal to the signal enhancement unit 130 into a set of oriented sub-bands and a lowpass residual band. Statistical texture parameters are then computed in steps B20-B40 using this decomposition. In particular, marginal statistics descriptors such as variance, skewness and kurtosis as well as minimum and maximum values of the image pixels are computed at each level of the pyramid, including parameters that describe the marginal statistics of the entire image. Moreover, autocorrelations and various cross-correlations are computed at and inbetween the levels of the pyramid.

From the thus computed texture parameters arbitrary amounts of alike looking texture can be generated. Specifically, a white noise image is generated in step B50 and decomposed into oriented sub-bands by the steerable pyramid approach in step B60 in accordance with the decomposition performed in step B10. Each sub-band of the white noise image is further tweaked in step B70 so as to meet the statistical constraints described by the computed texture parameters. Finally, the pyramid is collapsed in step B80 and tweaked in step B90 so that the marginal statistics of its pixel data meets statistical parameters computed in step B20 for the entire image. Steps B60 - B90 may be iterated, i.e., the generated texture may be employed as a starting point for the decomposition and tweaking process instead of the white noise image, for a predetermined number of iterations or until the synthesized texture has become sufficiently stable.

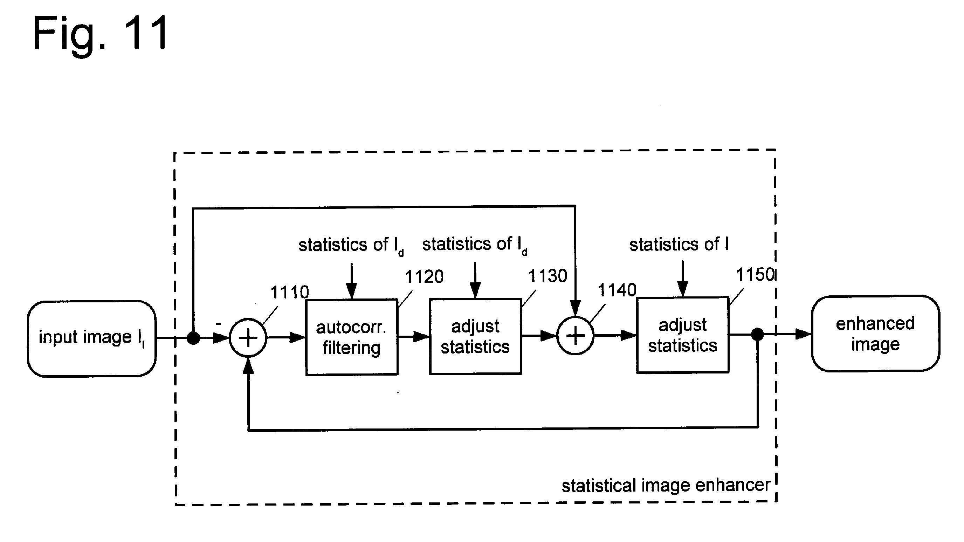

Figure 11 is a block diagram illustrating another conventional method for enhancing an image based on statistical data of a reference image. For example, if an original image I and a low-pass image $I_l$ are given, the low-pass image $I_l$ can be enhanced by reconstructing the missing frequency components by adjusting some image statistics. To this end, the higher order statistics and the autocorrelation of the original image I and the difference image $I_d = I - I_l$ are analyzed in a first step. In a second step, the result of the analysis is used to reconstruct the missing frequency components in the low-pass image $I_l$.

Specifically, an input image $I_l$, which may correspond to a low-pass filtered (or coded) version of an original image I, is fed to a first image processing unit 1120 that applies a filter in order to match spatial statistical properties of the input image with spatial statistical properties of a first reference image $I_d$. The first reference image may correspond to the difference between the original image and a lowpass filtered version thereof, $I_d = I - I_l$. In this case, the filter basically corresponds to a carefully designed high-pass filter. The thus filtered image is then fed to a second image processing unit 1130 that matches higher order statistical properties with those of the first reference image $I_d$. The output of the second image processing unit 1130 is added to the input image by means of adder 1140 and fed to a third image processing unit 1150 in order to match higher order statistical properties with those of a second reference image I, such as the original image.

Since adjusting the statistical properties in the individual image processing units 1120, 1130, and 1150 cannot be performed independently of each other, an iteration may be executed in order to further improve the result. Hence, the output of the third image processing unit 1150 is fed back to a subtractor 1110 to subtract the input image and to apply the above described processing steps to the thus computed difference image. A number of about seven iterations has turned out to yield optimal results. In the zero-th iteration, when no output of the third image processing unit 1150 is yet available, the subtractor 1110 may be skipped, for instance by means of a switch (not shown), so as to directly feed the input image to the first image processing unit 1120. Alternatively, an optional input image (not shown) may be provided, for instance from another conventional sharpening algorithm to substitute the non-available output of the third image processing unit 1150.

The first image processing unit 1120 preferably performs autocorrelation filtering in order to adjust (parts of) the autocorrelation function of the image to an autocorrelation function computed for the first reference image. To this end, the first image processing unit 1120 determines filter coefficients based on values of the autocorrelation function of the input image and based on values of the autocorrelation function of the first reference image, which form part of its spatial statistical properties. Any method known in the art for determining such a filter may be employed, in particular the method disclosed in J. Portilla and E. P. Simoncelli, A parametric texture model based on joint statistics of complex wavelet coefficients, Int. J. Comput. Vis., vol. 40, 2000.

In case of image sharpening, values of the autocorrelation function in a neighborhood of zero are particularly relevant. Accordingly, the first image processing unit 1120 determines filter coefficients of an $NxN$-tap filter on the basis of $NxN$ zero-neighborhood values of the autocorrelation function of the input image and the first reference image. A number of N = 7 has turned out to yield optimum results, although any other number of taps may be employed likewise. A filter with the thus determined filter coefficients is then applied to the input image in order to generate the output of the first image processing unit 1120.

The second and the third image processing units 1130, 1150 are adapted to adjust higher order statistical properties of their respective input signals. The higher order statistical properties comprise marginal statistics descriptors such as mean, variance, skewness and kurtosis of the pixel values. Mean and variance, for instance, may be considered as a measure for average brightness and contrast, respectively, of the image. Optimum results can be obtained by adjusting the marginal distribution up to and including its fourth moment, i.e., by adjusting all of mean, variance, skewness and kurtosis. Other statistical properties may likewise be employed, including only a subset of the described properties, even higher order moments of the marginal distribution, other statistical properties such as spatial correlations of the pixel values, correlations between different subbands of the image, and so on.

The second and the third image processing units 1130, 1150 determine a transformation that maps each pixel value to a target pixel value so that the desired marginal statistics constraints are met. Mean and variance, for instance, can be matched by subtracting the mean of the input signal from each pixel value, scaling the result by the ratio of the target standard deviation (i.e. the square root of the variance) and the standard deviation of the input signal, and adding the target mean. Skewness and kurtosis can likewise be adjusted by applying a (6th-order) polynomial to the pixel values. Any method known in the art for determining the coefficients for such a transformation can be employed, including gradient projection algorithms or the method disclosed by J. Portilla and E. P. Simoncelli, ibid.

Conventional enhancement techniques generally enhance the sharpness of an image. The effects of these techniques are often impressive but also can lead to unnatural appearance of the pictures. Especially in the case of lossy coding schemes problems tend to occur. When image enhancement techniques are applied to such kind of compressed images, coding artefacts, such as blocking artefacts, may be amplified or just become visible.

SUMMARY OF THE INVENTION

The aim of the present invention is to provide an improved method for enhancing image quality of images encoded by a prediction-based video coding scheme and a corresponding apparatus.

This is achieved by the features as set forth in the independent claims.

Preferred embodiments are the subject matter of dependent claims.

It is the particular approach of the present invention to apply an image enhancement post-processing technique in a spatially selective manner in accordance with the prediction error so as to avoid coding artefacts to be amplified.

According to a first aspect of the present invention, a method for enhancing image quality of images encoded by a prediction-based video coding scheme is provided. The method comprises the steps of receiving encoded video data including prediction error data; decoding an image of the encoded video data; processing the decoded image; generating an output image by computing a weighted sum of the decoded image and the processed image, and is characterized by determining weights for the weighted sum in accordance with the prediction error data.

According to a further aspect of the present invention, a method for encoding video data is provided. The method comprises the steps of obtaining prediction error data by predicting an image of the received video data and computing the difference between the predicted image and the image of the received video data; obtaining parameter data by analysing statistical properties of the image of the received video data; generating encoded video data including the prediction error data and the parameter data, and is characterized in that the analysing step comprises weighting pixels of the image of the received video data in accordance with the prediction error data.

According to a further aspect of the present invention, an apparatus for enhancing image quality of images encoded by a prediction-based video coding scheme is provided. The apparatus comprises a receiving unit for receiving encoded video data including prediction error data; a decoder for decoding an image of the encoded video data; an image processor for processing the decoded image and for generating an output image by computing a weighted sum of the decoded image and the processed image, and is characterized in that the image processor is adapted to determine weights for the weighted sum in accordance with the prediction error data.

According to a further aspect of the present invention, an apparatus for encoding video data is provided. The apparatus comprises a prediction unit for predicting an image of the received video data; a subtractor for obtaining prediction error data by computing the difference between the predicted image and the image of the received video data; an analyser for obtaining parameter data by analysing statistical properties of the image of the received video data; an output unit for generating encoded video data including the prediction error data and the parameter data, and is characterized in that the analyser is adapted to weight pixels of the image of the received video data in accordance with the prediction error data.

Preferably, the processed image is weighted more strongly in image areas where absolute values of the prediction error data are small than in image areas where absolute values of the prediction error data are large. In this manner, the amplification of coding artefacts can be avoided, in case that coding artefacts are more likely to occur in image areas where the prediction error is large.

Preferably, the weights are determined on a pixel-by-pixel basis. In this manner, a mask with the same spatial resolution as the image and the prediction error can readily be prepared and employed as source for the weight at each pixel position.

Preferably, a mask value is computing for each pixel of the decoded image by mapping the absolute value of a corresponding value of the prediction error data to a non-negative value not greater than one, so that the weights of the weighted sum for computing a pixel value of the output image may be determined by a corresponding mask value and one minus said mask value.

Preferably, the absolute values are normalized in accordance with the standard deviation of the prediction error data. In this manner, reliable results may be obtained independently of the fluctuations of the prediction error.

Preferably, the mapping is achieved by clipping the absolute values to a non-negative value not greater than one. In this manner, the mask values may directly be employed as weights for computing the weighted sum.

Preferably, the mean of the mask values is adjusted to a predetermined target value. In this manner, the overall strength of the image enhancement may be controlled.

Preferably, a morphological operation is applied to the mask values, especially a closing operation. In this manner, contours of the mask can be smoothed in order to generate a more regular appearance of the enhanced image.

Preferably, processing of the decoded image comprises applying a sharpening filter, a high-pass filter or a band-pass filter to the decoded image. These filters can readily be applied and improve the sharpness impression of the image.

Preferably, the encoded video data further includes parameter data, said parameter data indicating statistical properties of the original image, and wherein the decoded image is processed in accordance with the parameter data. More preferably, the parameter data indicates statistical properties of areas of the original image where absolute values of the prediction error data are small. In this manner, the post-processing of the decoded image may employ the additional information on the original image in order to improve subjective image quality of the decoded image accordingly. Since post-processing is predominantly applied to areas of the original image where absolute values of the prediction error data are small, parameters that describe those image areas are most important.

Preferably, processing the decoded image comprises applying a texture generation algorithm. Image enhancement techniques based on texture synthesis can greatly improve subject image quality without requiring a lot of additional signalling overhead.

At the encoder side, pixel from image areas, where absolute values of the prediction error data are small, are preferably weighted more strongly than pixels from image areas, where absolute values of the prediction error data are large. This is preferably achieved by computing for each pixel of the image of the received video data a mask value by mapping the absolute value of a corresponding value of the prediction error data to a non-negative value, so that the weight for weighting a pixel of the image of the received video data may be determined by a corresponding mask value divided by the sum of all mask values. In this manner, it can be ensured that the statistical properties predominantly reflect those image areas, where image enhancement is predominantly applied at the decoder side.

Preferably, the parameter data comprises an indication of a moment of the weighted image. Moments of pixel histograms are important statistical properties and may provide a lot of additional information on the original image.

Preferably, the step of obtaining prediction error data further comprises quantizing the difference between the predicted image and the image of the received video data. In this manner, the mask may be constructed at the encoder side from the same data as on the decoder side, viz. the quantized prediction error data, since generally only the quantized prediction is available at the decoder side. Hence, the masks employed on encoder and decoder side are identical or at least similar.

The above and other objects and features of the present invention will become more apparent from the following description and preferred embodiments given in conjunction with the accompanying drawings, in which:

Fig. 1    is a block diagram illustrating the mask-controlled image enhancement technique in accordance with a first embodiment of the present invention;

Fig. 2    is a block diagram illustrating an exemplary hybrid video decoder including the construction of a mask in accordance with the first embodiment of the present invention;

Fig. 3    is a block diagram illustrating the construction of the mask in accordance with the present invention;

Fig. 4    is a block diagram illustrating the mask-controlled image enhancement technique in accordance with a second embodiment of the present invention;

Fig. 5    is a block diagram illustrating an exemplary hybrid video encoder including the construction of a mask in accordance with the second embodiment of the present invention;

Fig. 6    is a block diagram illustrating an exemplary hybrid video decoder including the construction of a mask in accordance with the second embodiment of the present invention;

Fig. 7    is a block diagram illustrating a conventional video encoder;

Fig. 8    is a block diagram illustrating a conventional video decoder.

Fig. 9    is a flow chart illustrating a conventional method for image and video coding employing additional statistical parameters;

Fig. 10    is a flow chart illustrating a conventional method for texture analysis and synthesis; and

Fig. 11    is a block diagram illustrating a conventional method for image enhancement employing statistical parameters.

DETAILED DESCRIPTION

The present invention aims on the reduction of coding artefact amplification that is caused by an application of conventional image enhancement techniques to coded pictures. To this end, the (quantized) prediction error of a coded video sequence is used at the decoder side to construct a mask. The mask indicates image areas where coding artefacts are likely to occur. The mask is used to control the image enhancement process. More specifically, the mask is employed to ensure that the enhancement process is predominantly applied to those image areas, where coding artefacts are not likely to occur.

Areas of a coded image where coding artefacts are likely to occur are generally those where prediction fails, e.g. due to a large amount of motion or the appearance of previously hidden background details. Therefore, the prediction error is large in these areas. In case of lossy coding the prediction error itself is not available at the decoder. Only a quantized version is transmitted to the decoder as the residual. Nevertheless, even after quantization a large value of the residual indicates inaccurate prediction. Areas with inaccurate prediction are thus interpreted as being critical for the occurrence of coding artefacts.

Having thus identified areas that are prone for coding artefacts, a mask can be constructed indicating these areas in order to control application of an image enhancement technique accordingly. In this manner, an application of the enhancement technique to areas prone for coding artefacts can be restricted and amplification of coding artefacts prevented.

FIRST EMBODIMENT

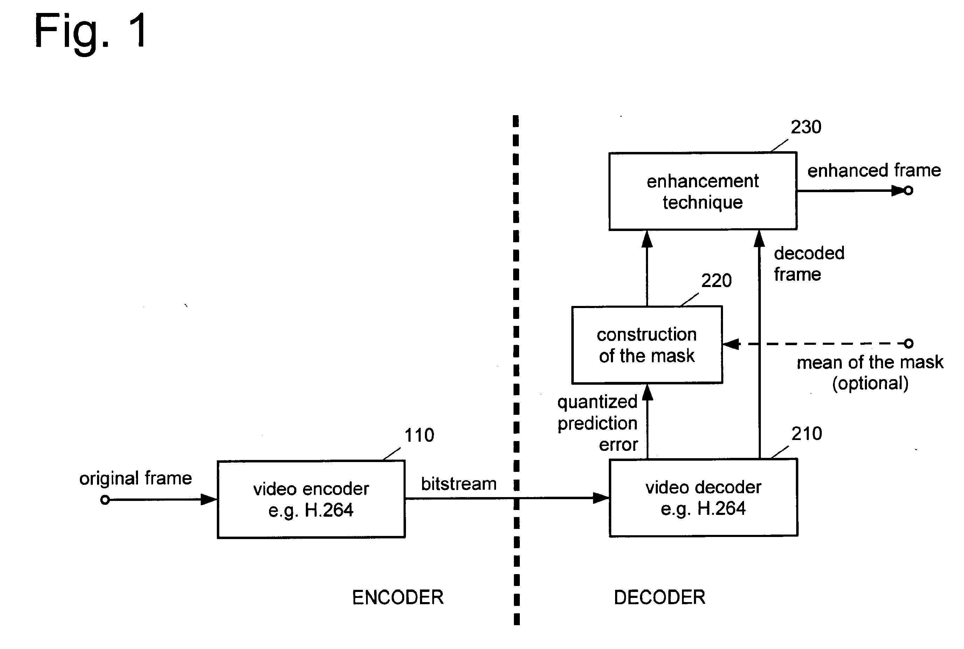

Figure 1 is a block diagram illustrating the mask-controlled image enhancement technique in accordance with a first embodiment of the present invention.

Video encoder 110 receives an original sequence of video images, applies a video encoding method, and generates a bitstream representing the encoded video signal. The video encoding method may be any conventional prediction-based encoding method, including MPEG-2 and H.264/AVC. The resulting bitstream is transmitted to the decoder 210, who is applying a corresponding decoding method in order to generate a sequence of decoded video images.

As explained above in conjunction with Fig. 8, the decoder employs the quantized prediction error signal in order to recover the decoded image. According to the present invention, this prediction error signal is employed in block 220 to construct a mask. This block may further receive a target value for the mean of the mask, which may be set in accordance with a user's preferences or automatically. The target value of the mean may thus be employed to control the overall effect of the image enhancement process. Details of the mask construction process will be explained below.

The mask is then employed in block 230 to control the image enhancement technique. The image enhancement technique may for instance be controlled by computing a conventionally enhanced image by applying the enhancement technique in a first step and by computing a weighted sum of the conventionally enhanced image and the decoded image in order to generate the final output image in a second step. Here, the weighted sum is computed on a pixel-to-pixel basis and the weights at each pixel are taken in accordance with a corresponding mask value. The result is an enhanced sequence of frames wherein any amplification of coding artefacts has been prevented.

A person skilled in the art will appreciate that the present invention is neither restricted to a particular enhancement technique nor to a particular video coding technique. Rather, the invention may be carried out in conjunction with any post-processing method applied at any prediction-based video or image decoder. The post-processing method may include any form of high-pass filtering, local contrast enhancement such as unsharp masking, and statistical image enhancement as described above in conjunction with Fig. 11. The prediction-based video or image decoder may include any form of hybrid video decoder based on motion compensation and/or intra frame prediction, such as MPEG-2, H. 264/AVC, etc.

It is also apparent from the above description of the first embodiment of the present invention, that the mask is only used at the decoder side to control the effect of an image enhancement technique. In this embodiment, the method is a pure post-processing method and totally independent of the encoder.

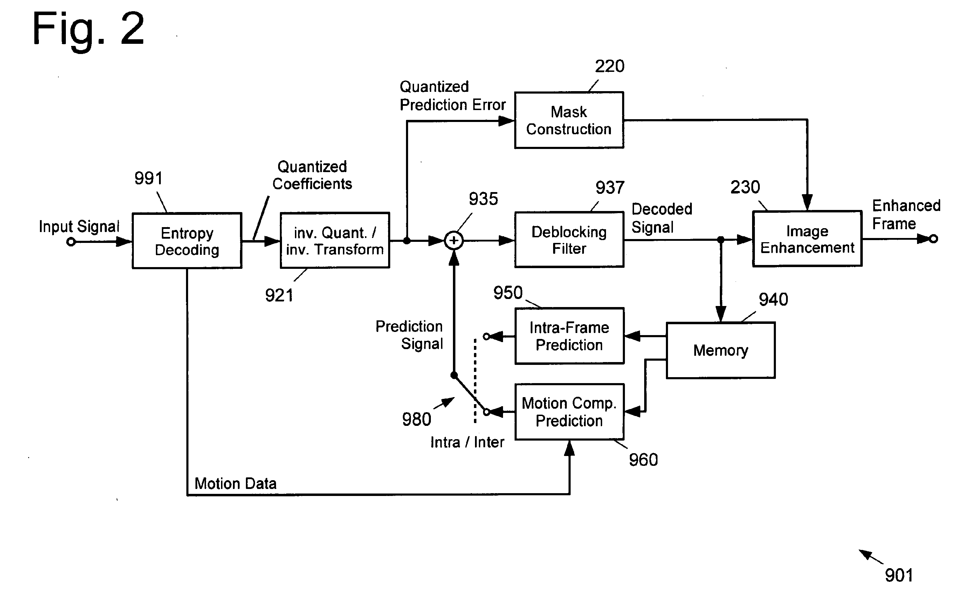

Figure 2 is a block diagram illustrating an exemplary implementation of the first embodiment of the present invention in a hybrid video decoder with intra- and inter-frame prediction such as H.264/AVC. The block diagram is similar to the block diagram of Fig. 8, wherein like elements are denoted by like reference numerals, a repetition of their detailed explanation thus being omitted.

The block diagram of Fig. 2 merely differs from the block diagram of Fig. 8 by block 220 for constructing the mask. The mask construction block 220 receives the output of the inverse transform unit 921, i.e., the quantized prediction error. The quantized prediction error is employed to construct the mask, which is then fed to the image enhancement block 230, which is adapted to apply the image enhancement technique in accordance with the mask values received.

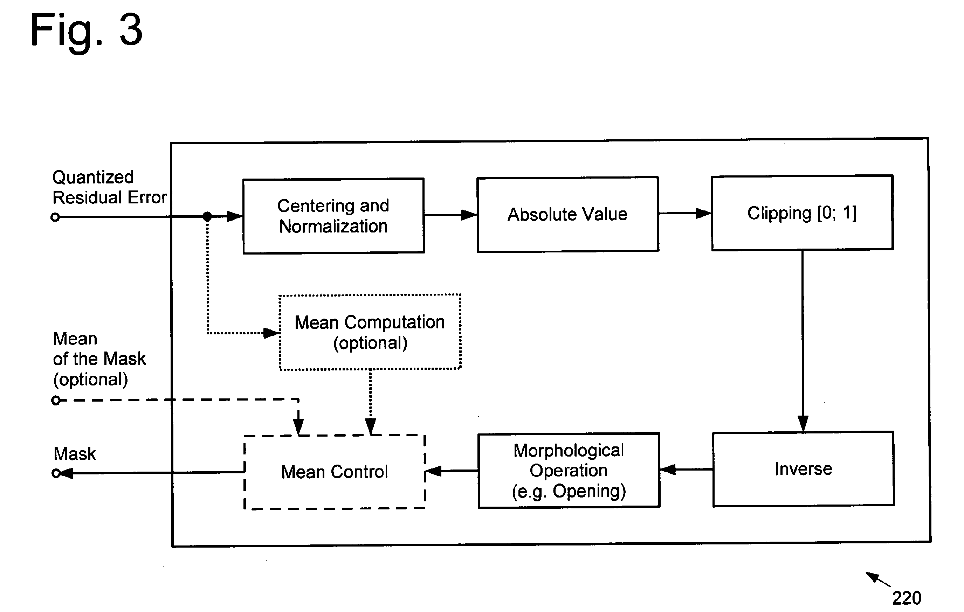

Figure 3 is a block diagram illustrating the construction of the mask from the quantized prediction error in accordance with embodiments of the present invention. The construction comprises of the following steps:

First, values of the quantized prediction error are mapped to a range between 0 and 1. This mapping may comprise taking the absolute values of the quantized prediction error. This mapping may also comprise a normalization to ensure temporal consistency of the mask. In a coded sequence the structure of the residual can vary a lot from frame to frame, especially if different quantisation parameters (QP) are used. B frames, for example, are generally coded with a QP offset, so that the residual changes a lot. Therefore the normalization is important for the temporal consistency of the mask. This mapping may further comprise clipping the residual to the range between 0 and 1.

Second, morphological operations (e.g. opening) are applied to make the spatial structure of the mask more homogeneous.

Finally, a last (optional) step of the construction procedure may consist of an adjustment of the mean of the mask. The mean may be set in accordance with a user's preferences. The mean may also be calculated by an automatic mean computation procedure. Such automatic procedures calculate an optimal value considering parameters like QP for example.

Image enhancement techniques generally enhance only the luma component, because the sharpness impression of the human visual system is mainly dependent on the luminance. Hence, the mask is preferably constructed from the luminance channel (Y) only. However, the masking scheme may also be extended to chroma components or even to other colour spaces without departing from the present invention.

Specifically, the absolute value of the luminance residual ($Y_{Res}$) is normalized,

$$Y_{res_1}(i,j) = \left| \frac{Y_{res}(i,j)}{5\sqrt{\mathrm{Var}\, Y_{res}}} \right| . \tag{1}$$

It is to be noted that the above normalization is merely exemplary and that any other normalization may also be employed without departing from the invention.

Then clipping is performed and the result is inverted in the interval [0,1]. The inversion is done to get the weighting mask in a form that it can be multiplied directly to the enhancement component, where a value of 1 would mean 100% enhancement and a 0 no enhancement:

$$Y_{res_2}(i,j) = 1 - \min(Y_{res_1}(i,j), 1) \tag{2}$$

Next the morphological operation is applied, for example with opening (o):

$$Y_{mask} = S \circ Y_{res_2}, \tag{3}$$

where S is the chosen structuring element. Preferably, a disk with a diameter of 17 pixels is used as structuring element, but any other disk diameter may likewise be used. However, other morphological operators may also be employed, such as top hat filtering, opening followed by closing or only dilation, etc.

Finally the mean of the mask may be adjusted. Good results can be obtained by using an automatic computation of the desired mean (M), e.g. using the formula:

$$M = \min\left[ 0.98, \ \max\left( 0.2 + \frac{12}{QP}, \ \frac{\sum_{i,j}|Y_{res}(i,j)|}{10 \cdot width \cdot height} \right) \right] \tag{4}$$

with QP the quantization parameter used for coding, $Y_{Res}$ the unprocessed residual, and *width* and *height* the resolution of the sequence. The mean may be adjusted by pointwise multiplication and clipping above one.

The mask can be directly used to weight the effect of an enhancement process by computing a weighted sum of the (unprocessed) decoded image $Y_{dec}$ and the (processed) decoded image $Y_{enh}$ to which the enhancement technique has been applied. The weights for computing the weighted sum are determined by the mask on a pixel-to-pixel basis,

$$Y_{out}(i,j) = Y_{enh}(i,j) \cdot Y_{mask}(i,j) + Y_{dec}(i,j) \cdot [1 - Y_{mask}(i,j)] . \tag{5}$$

The result is an output image $Y_{out}$, wherein the conventional enhancement technique has predominantly been applied to areas with low prediction error so that any amplification of coding artefacts may be avoided.

SECOND EMBODIMENT

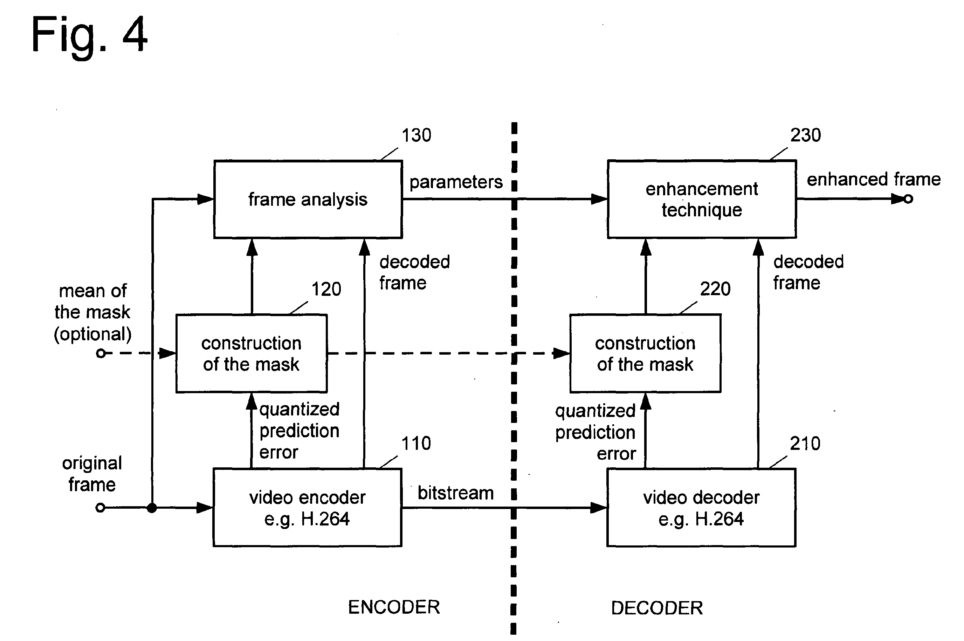

Figure 4 is a block diagram illustrating the mask-controlled image enhancement technique in accordance with a second embodiment of the present invention. The block diagram is similar to the block diagram of Fig. 1 and like elements are denoted by like reference numerals, a repetition of their detailed explanation thus being omitted.

In contrast to the first embodiment, the second embodiment comprises construction of the mask on the encoder side, too. This is advantageous for image enhancement techniques that use additional information from the original image, which are transmitted in addition to the standard bitstream. Such information typically consists of statistical properties of the original image and/or of the difference between the original and the coded image. This information is employed to control the enhancement process. Examples for such enhancement techniques have been provided above in conjunction with Figs. 9 to 11.

Referring now to Fig. 4, the quantized prediction error, which -- as explained in conjunction with Fig. 7 -- is available in any prediction based coding scheme, is fed to block 120 in order to construct the mask in the very same manner as in block 220 at the decoder side. The resulting mask is then fed together with the original and the internally decoded frame to frame analysis block 130 in order to determine statistical properties of the original frame and/or of the difference between the original image and the decoded frame.

The statistical properties determined by frame analysis block 130 may correspond to those described above in conjunction with Fig. 11 and may comprise spatial properties of the images (correlations) and properties of the intensity histograms (marginal statistics). Specifically, values of the autocorrelation function in a neighbourhood of zero may be determined, as well as moments of intensity and/or colour distributions, including mean, variance, skewness, and kurtosis of the intensity distribution. To this end, the methods known in the art for estimating random variables may be employed.

In the frame analysis block 130, the analysis is performed in accordance with the mask. This means that every pixel of the image may be weighted by a corresponding mask value when computing descriptors of the marginal image statistics, such as moments of pixel histograms. The weighted first and the second moment may for instance be computed as

$$\mathrm{E}\,Y = \frac{\sum_{i,j} Y_{mask}(i,j)\,Y(i,j)}{\sum_{i,j} Y_{mask}(i,j)} \tag{6}$$

and

$$\mathrm{Var}\,Y = \frac{\sum_{i,j} Y_{mask}(i,j)\left[Y(i,j)^2 - (\mathrm{E}\,Y)^2\right]}{\sum_{i,j} Y_{mask}(i,j)}. \tag{7}$$

This results in an improvement for the image enhancement process at the decoder side, because the computed parameters correspond directly to the weighting of the image areas at the decoder. In other words, the parameters determined by the encoder selectively reflect properties of those image areas where the enhancement technique will predominantly be applied by the decoder.

The mask construction block 120 may further receive a target value for the mean of the mask, which is preferably set automatically and may also be signalled to the decoder. The target value of the mean may be employed to control the overall effect of the image enhancement process.

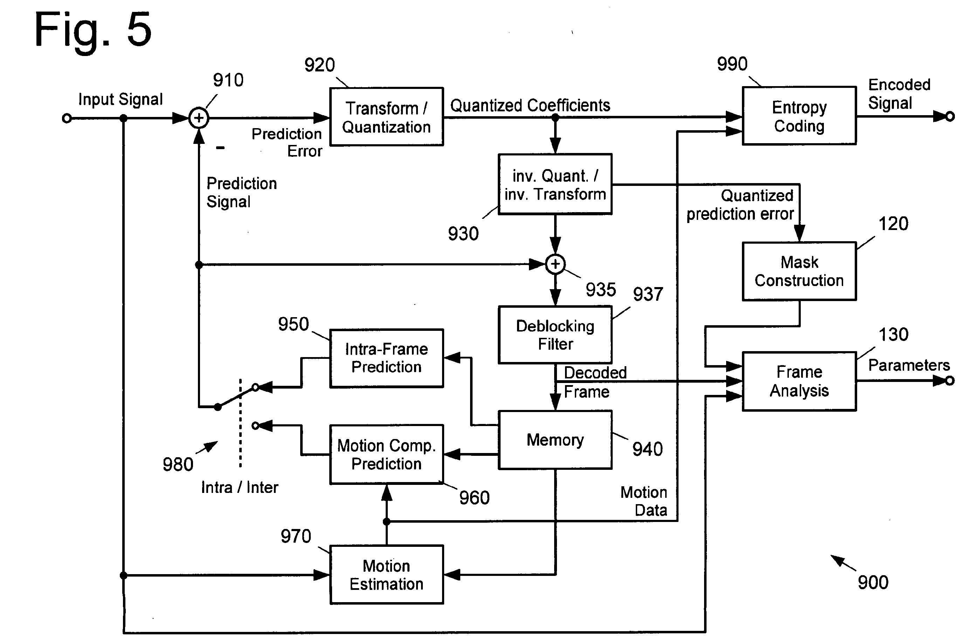

Figure 5 is a block diagram illustrating an exemplary hybrid video encoder with intra- and inter-frame prediction such as H.264/AVC, including the construction of a mask in accordance with the second embodiment of the present invention. The block diagram is similar to the block diagram of Fig. 7, wherein like elements are denoted by like reference numerals, a repetition of their detailed explanation thus being omitted.

The block diagram of Fig. 5 merely differs from the block diagram of Fig. 7 by block 120 for constructing the mask and block 130 for analysing the frame. The mask construction block 120 receives the output of the inverse transform unit 930, i.e., the quantized prediction error. The quantized prediction error is employed to construct the mask, which is then fed to the frame analysis block 130 together with a copy of the decoded frame and the input signal. Based on this input, the frame analysis blocks performs frame analysis in order to determine the parameters required for image enhancement on the decoder side, as explained above in conjunction with Figs. 9 and 10.

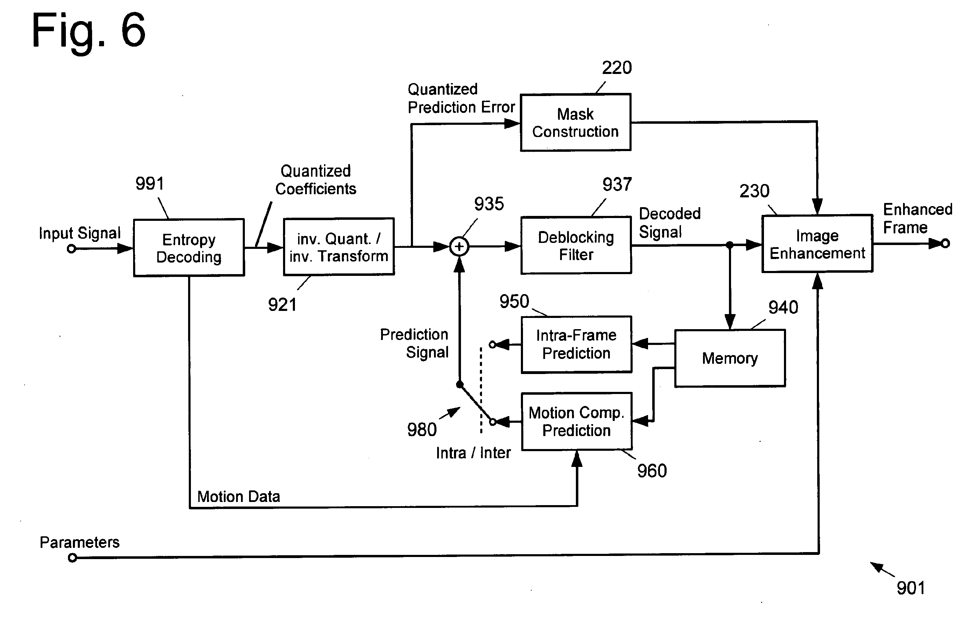

Figure 6 is a block diagram illustrating an exemplary hybrid video decoder in accordance with the second embodiment of the present invention. This decoder is similar to the decoder of the first embodiment, except that it applies image post-processing that relies on additional parameters provided by the encoder. Hence, the block diagram is similar to the block diagram of Fig. 2, wherein like elements are denoted by like reference numerals, a repetition of their detailed explanation thus being omitted.

The block diagram of Fig. 6 merely differs from the block diagram of Fig. 2 by the additional input of parameters that are directly fed to the image enhancement block 230. The image enhancement block 230 may thus apply an image enhancement technique that relies on additional (statistical) parameters provided by the encoder, such as the techniques described in combination with Figs. 9 - 11. In particular, the image enhancement block 230 may employ the statistical parameters for reconstructing image components, such as high-frequency components, that are missing in the decoded image due to lossy compression (coding error).

Summarizing, the present invention disclosed methods for enhancing the subjective image quality of decoded images by applying a post-processing technique without amplifying coding artefacts and a corresponding apparatus. This is achieved by applying an image enhancement technique predominantly to image areas where coding artefacts are not likely to occur. These areas are identified based on the prediction error, which is employed to construct a mask for controlling the image enhancement process.

**Claims**

1. A method for enhancing image quality of images encoded by a prediction-based video coding scheme, the method comprising the steps of

   receiving encoded video data including prediction error data;
   decoding an image of the encoded video data;
   processing the decoded image;
   generating an output image by computing a weighted sum of the decoded image and the processed image,
   **characterized by**
   determining weights for the weighted sum in accordance with the prediction error data.

2. A method according to claim 1, wherein the processed image is weighted more strongly in image areas where absolute values of the prediction error data are small than in image areas where absolute values of the prediction error data are large.

3. A method according to claim 1 or 2, wherein the weights are determined on a pixel-by-pixel basis.

4. A method according to any of claims 1 to 3, further comprising the step of computing for each pixel of the decoded image a mask value by mapping the absolute value of a corresponding value of the prediction error data to a non-negative value not greater than one, and
   wherein weights of the weighted sum for computing a pixel value of the output image are determined by a corresponding mask value and one minus said mask value.

5. A method according to claim 4, further comprising the step of normalizing the absolute values in accordance with the standard deviation of the prediction error data.

6. A method according to claim 4 or 5, wherein the mapping is achieved by clipping the absolute values to a non-negative value not greater than one.

7. A method according to any of claims 4 to 6, further comprising the step of adjusting the mean of the mask values to a predetermined target value.

8. A method according to any of claims 4 to 7, further comprising the step of applying a morphological operation to the mask values.

9. A method according to claim 8, wherein the morphological operation is a closing operation.

10. A method according to any of claims 1 to 9, wherein processing of the decoded image comprises applying a sharpening filter to the decoded image.

11. A method according to any of claims 1 to 9, wherein processing of the decoded image comprises applying one of a high-pass filter and a band-pass filter to the decoded image.

12. A method according to any of claims 1 to 9, wherein the encoded video data further includes parameter data, said parameter data indicating statistical properties of the original image, and wherein the decoded image is processed in accordance with the parameter data.

13. A method according to claim 12, wherein the parameter data indicates statistical properties of areas of the original image where absolute values of the prediction error data are small.

14. A method according to claim 12 or 13, wherein processing the decoded image comprises applying a texture generation algorithm.

15. A method for encoding video data, said method comprising the steps of:

obtaining prediction error data by predicting an image of the received video data and computing the difference between the predicted image and the image of the received video data;
obtaining parameter data by analysing statistical properties of the image of the received video data;
generating encoded video data including the prediction error data and the parameter data;

**characterized in that**
the analyzing step comprises weighting pixels of the image of the received video data in accordance with the prediction error data.

16. A method according to claim 15, wherein pixels from image areas, where absolute values of the prediction error data are small, are weighted more strongly than pixels from image areas, where absolute values of the prediction error data are large.

17. A method according to claim 15 or 16, further comprising the step of

computing for each pixel of the image of the received video data a mask value by mapping the absolute value of a corresponding value of the prediction error data to a non-negative value, and
wherein the weight for weighting a pixel of the image of the received video data is determined by a corresponding mask value divided by the sum of all mask values.

18. A method according to claim 17, further comprising the step of normalizing the absolute values in accordance with the standard deviation of the prediction error data.

19. A method according to claim 17 or 18, further comprising the step of adjusting the mean of the mask values to a predetermined target value.

20. A method according to any of claims 17 to 19, further comprising the step of applying a morphological operation to the mask values.

21. A method according to claim 20, wherein the morphological operation is a closing operation.

22. A method according to any of claims 15 to 21, wherein the parameter data comprises an indication of a moment of the weighted image.

23. A method according to any of claims 15 to 22, wherein the step of obtaining prediction error data further comprises quantizing the difference between the predicted image and the image of the received video data.

24. An apparatus for enhancing image quality of images encoded by a prediction-based video coding scheme, the apparatus comprising:

a receiving unit for receiving encoded video data including prediction error data;

a decoder for decoding an image of the encoded video data;
an image processor for processing the decoded image and for generating an output image by computing a weighted sum of the decoded image and the processed image,

**characterized in that**
the image processor is adapted to determine weights for the weighted sum in accordance with the prediction error data.

25. An apparatus according to claim 24, wherein the processed image is weighted more strongly in image areas where absolute values of the prediction error data are small than in image areas where absolute values of the prediction error data are large.

26. An apparatus according to claim 24 or 25, wherein the weights are determined on a pixel-by-pixel basis.

27. An apparatus according to any of claims 24 to 26, further comprising a mask generating unit for computing for each pixel of the decoded image a mask value by mapping the absolute value of a corresponding value of the prediction error data to a non-negative value not greater than one, and
wherein weights of the weighted sum for computing a pixel value of the output image are determined by a corresponding mask value and one minus said mask value.

28. An apparatus according to claim 27, wherein the mask generating unit is further adapted to normalize the absolute values in accordance with the standard deviation of the prediction error data.

29. An apparatus according to claim 27 or 28, wherein the mask generating unit is further adapted to clip the absolute values to a non-negative value not greater than one.

30. An apparatus according to any of claims 27 to 29, wherein the mask generating unit is further adapted to adjust the mean of the mask values to a predetermined target value.

31. An apparatus according to any of claims 27 to 30, wherein the mask generating unit is further adapted to apply a morphological operation to the mask values.

32. An apparatus according to claim 31, wherein the morphological operation is a closing operation.

33. An apparatus according to any of claims 24 to 32, wherein the image processor is adapted to apply a sharpening filter to the decoded image.

34. An apparatus according to any of claims 24 to 32, wherein the image processor is adapted to apply one of a high-pass filter and a band-pass filter to the decoded image.

35. An apparatus according to any of claims 24 to 32, wherein the encoded video data further includes parameter data, said parameter data indicating statistical properties of the original image, and wherein the decoded image is processed in accordance with the parameter data.

36. An apparatus according to claim 35, wherein the parameter data indicates statistical properties of areas of the original image where absolute values of the prediction error data are small.

37. An apparatus according to claim 35 or 36, wherein the image processor is adapted to apply a texture generation algorithm.

38. An apparatus for encoding video data, said apparatus comprising:

a prediction unit for predicting an image of the received video data;
a subtractor for obtaining prediction error data by computing the difference between the predicted image and the image of the received video data;
an analyser for obtaining parameter data by analysing statistical properties of the image of the received video data;
an output unit for generating encoded video data including the prediction error data and the parameter data;

**characterized in that**
the analyser is adapted to weight pixels of the image of the received video data in accordance with the prediction error data.

39. An apparatus according to claim 38, wherein pixels from image areas, where absolute values of the prediction error data are small, are weighted more strongly than pixels from image areas, where absolute values of the prediction error data are large.

40. An apparatus according to claim 38 or 39, further comprising

  a mask generating unit for computing for each pixel of the image of the received video data a mask value by mapping the absolute value of a corresponding value of the prediction error data to a non-negative value, and wherein the weight for weighting a pixel of the image of the received video data is determined by a corresponding mask value divided by the sum of all mask values.

41. An apparatus according to claim 40, wherein the mask generating unit is adapted to normalize the absolute values in accordance with the standard deviation of the prediction error data.

42. An apparatus according to claim 40 or 41, wherein the mask generating unit is adapted to adjust the mean of the mask values to a predetermined target value.

43. An apparatus according to any of claims 40 to 42, wherein the mask generating unit is adapted to apply a morphological operation to the mask values.

44. An apparatus according to claim 43, wherein the morphological operation is a closing operation.

45. An apparatus according to any of claims 38 to 44, wherein the parameter data comprises an indication of a moment of the weighted image.

46. An apparatus according to any of claims 38 to 45, further comprising a quantizer for quantizing the prediction error data, and wherein the pixels of the image are weighted in accordance with the quantized prediction error data.

# Fig. 1

EP 2 051 524 A1

Fig. 2

# Fig. 3

Quantized Residual Error → [Centering and Normalization] → [Absolute Value] → [Clipping [0; 1]]

Mean of the Mask (optional)

[Mean Computation (optional)]

Mask ← [Mean Control] ← [Morphological Operation (e.g. Opening)] ← [Inverse]

220

EP 2 051 524 A1

# Fig. 4

EP 2 051 524 A1

# Fig. 5

EP 2 051 524 A1

# Fig. 6

EP 2 051 524 A1

# Fig. 7

EP 2 051 524 A1

# Fig. 8

# Fig. 9

A10 — **separate input image into first and second sub-band component**

A20 — **analyze high-frequency component and compute texture parameters**

A30 — **encode texture parameters**

A40 — **encode low-frequency component by conventional data representation method**

encoded image data

A50 — **decode low-frequency component by conventional data representation method**

A60 — **decode texture parameters**

A70 — **synthesize texture from texture parameters and generate high-frequency component**

A80 — **compose output image from low-frequency and high-frequency sub-band components**

# Fig. 10

**B10** — construct steerable pyramid from original texture image

**B20** — compute marginal statistics descriptors at each level of the pyramid incl. entire texture image

**B30** — compute autocorrelation of lowpass images at each level of the pyramid

**B40** — compute crosscorrelation of coefficients at adjacent positions, orientations, and scales

**B90** — impose image statistics

**B80** — collapse steerable pyramid into synthesized texture image

**B70** — impose statistical constraints described by texture parameters to each level of the pyramid

**B60** — construct steerable pyramid

**B50** — generate white noise image

texture parameters

EP 2 051 524 A1

# Fig. 11

**Europäisches Patentamt**
**European Patent Office**
**Office européen des brevets**

# EUROPEAN SEARCH REPORT

Application Number

EP 07 02 0168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 571 171 A (SAMSUNG ELECTRONICS CO LTD [KR]) 24 November 1993 (1993-11-24) <br> * abstract * <br> * page 2, lines 2,3; figures 4A-4B * <br> * page 3, lines 11-15 * <br> * page 6, line 5 * <br> * page 6, lines 48-50 * <br> ----- | 1-14, 24-37 | INV. <br> H04N7/26 <br> H04N7/30 <br> G06T5/00 |
| Y | US 2007/116125 A1 (WADA NAOFUMI [JP] ET AL) 24 May 2007 (2007-05-24) <br> * paragraphs [0011], [0030] - [0033], [0045] - [0047] * <br> * paragraphs [0068] - [0090] * <br> ----- | 1-14, 24-37 | |
| A | CHITTINENI C B: "SINGLE FILTERS FOR COMBINED IMAGE GEOMETRIC MANIPULATION AND ENHANCEMENT" <br> 19930203, <br> vol. 1903, 3 February 1993 (1993-02-03), pages 111-121, XP001028080 <br> * pages 112-113, paragraph 3 * <br> * figure 3 * <br> ----- | 1-14, 24-37 | |
| A | NDJIKI-NYA P ET AL: "Improved H.264/AVC coding using texture analysis and synthesis" <br> PROCEEDINGS 2003 INTERNATIONAL CONFERENCE ON IMAGE PROCESSING. ICIP-2003. BARCELONA, SPAIN, SEPT. 14 - 17, 2003; [INTERNATIONAL CONFERENCE ON IMAGE PROCESSING], NEW YORK, NY : IEEE, US, <br> vol. 2, 14 September 2003 (2003-09-14), pages III-849, XP002286886 <br> ISBN: 978-0-7803-7750-9 <br> * abstract * <br> * page 849; figure 1 * <br> * page 850, paragraph 2.2-2.2 * <br> ----- <br> -/-- | 1-14, 24-37 | TECHNICAL FIELDS SEARCHED (IPC) <br><br> H04N <br> G06T |

~~The present search report has been drawn up for all claims~~

| Place of search | Date of completion of the search | Examiner |
|---|---|---|
| Munich | 14 August 2008 | Le Guen, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 07 02 0168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 02/056583 A (KONINKL PHILIPS ELECTRONICS NV [NL]) 18 July 2002 (2002-07-18) * page 1, lines 6,7 * * page 4, lines 17-19 * * page 5, lines 13-19 * ----- | 1-14, 24-37 | |

TECHNICAL FIELDS
SEARCHED      (IPC)

~~The present search report has been drawn up for all claims~~

| Place of search | Date of completion of the search | Examiner |
|---|---|---|
| Munich | 14 August 2008 | Le Guen, Benjamin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt
European
Patent Office
Office européen
des brevets

Application Number

EP 07 02 0168

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-14, 24-37

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 07 02 0168

The Search Division considers that the present European patentapplication does not comply with the
requirements of unity of invention and relates to severalinventions or groups of inventions, namely:

1. claims: 1-14,24-37

   Method and apparatus for enhancing quality of a decoded
   image comprising a first step of processing the decoded
   image and a second step of computing a weighted sum of the
   originally decoded image and the processed image, wherein
   the weights for the weighting sum are determined in
   accordance with a prediction error received by the decoder.
   ---

2. claims: 15-23,38-46

   Method for encoding video data comprising the step of
   analysing statistical properties of an image of the input
   video data to obtain parameter data, wherein the analysis
   comprises weighting the pixels of the image in accordance
   with a prediction error obtained at the encoder by computing
   a difference between the input image and a predicted image.
   ---

## ANNEX TO THE EUROPEAN SEARCH REPORT
## ON EUROPEAN PATENT APPLICATION NO.

EP 07 02 0168

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2008

| Patent document cited in search report | | Publication date | Patent family member(s) | | Publication date |
|---|---|---|---|---|---|
| EP 0571171 | A | 24-11-1993 | CN | 1081807 A | 09-02-1994 |
| | | | DE | 69316439 D1 | 26-02-1998 |
| | | | DE | 69316439 T2 | 13-08-1998 |
| | | | JP | 2728619 B2 | 18-03-1998 |
| | | | JP | 7022962 A | 24-01-1995 |
| | | | RU | 2072562 C1 | 27-01-1997 |
| | | | US | 5384849 A | 24-01-1995 |
| US 2007116125 | A1 | 24-05-2007 | JP | 2007150432 A | 14-06-2007 |
| WO 02056583 | A | 18-07-2002 | CN | 1428042 A | 02-07-2003 |
| | | | EP | 1352516 A2 | 15-10-2003 |
| | | | JP | 2004518338 T | 17-06-2004 |
| | | | US | 2002122603 A1 | 05-09-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **J. PORTILLA ; E. P. SIMONCELLI.** A parametric texture model based on joint statistics of complex wavelet coefficients. *Int. J. Comput. Vis.,* 2000, vol. 40